# EUROPEAN PATENT SPECIFICATION

(11) **EP 3 487 722 B1**
(45) Date of publication and mention of the grant of the patent: **08.06.2022**
(21) Application number: 17831437.3
(22) Date of filing: 15.06.2017
(51) Int. Cl.: B60K 15/067, B60K 15/07

(54) **A FIXATION ARRANGEMENT**
BEFESTIGUNGSANORDNUNG
AGENCEMENT DE FIXATION

(30) Priority: 21.07.2016 SE 1651076
(43) Date of publication of application: 29.05.2019
(73) Proprietor: Scania CV AB, 151 87 Södertälje (SE)
(72) Inventor: BÖRJES, Markus, 125 44 Älvsjö (SE); PASIC, Anel, 151 48 Södertälje (SE)
(74) Representative: Scania CV AB
(86) International application number: PCT/SE2017/050640
(87) International publication number: WO 2018/017006

(56) References cited:
- CN-A- 103 909 822
- DE-A1-102009 042 596
- DE-A1-102009 042 596
- DE-A1-102012 004 319
- DE-A1-102012 023 160
- FR-A1- 2 927 132
- FR-A1- 2 927 132
- SE-C2- 527 073
- US-A- 2 941 273

## Description

### TECHNICAL FIELD OF THE INVENTION

The present invention relates to an arrangement for fixation of one or more objects comprising
- a strap configured to have opposite ends thereof connected to a supporting body to which said objects are to be fixed by tightening the strap therearound, and
- a strap tightening assembly comprising a couple of two pins spaced apart and extending transversely to the longitudinal extension of the strap and in parallel with the strap and a member creating an interconnection of the pins and configured to be acted upon for tightening the strap around said objects by reducing the distance separating the pins.

Such arrangements may for example be used to fixate objects to a chassis fixed part of a motor vehicle, especially a heavy motor vehicle, such as a truck, a lorry or a bus, which is the reason for below discussing the invention and the problem to be solved thereby for such a use for illuminating the invention but accordingly not restrict it to that application. Thus, opposite ends of the strap may be connected to any supporting body and fix any object thereto by tightening of the strap therearound.

Furthermore, the strap may have more than one part forming the strap by being connected in series between said opposite ends of the strap.

### BACKGROUND ART

An arrangement of the type defined above is known through for example CN 103909822. A known such arrangement is used to fixate fuel storage tanks, for example containing diesel or gas fuel, to L-shaped brackets secured to the chassis of motor vehicles in the form of trucks. In such a known arrangement the strap has two parts interconnected by a said assembly for tightening the strap by actuating a said member in the form of a bolt interconnecting the two pins of the two strap parts. The bolt extends through through-holes in the two pins, in which one of the pins has a through-hole with a diameter exceeding the diameter of the bolt and the other has a through-hole provided with an internal thread with which the thread of the bolt engages. The bolt may not be tightened so that the pins come to bear against each other so as to be able to ensure a required tightening and jamming force of the strap in spite of tolerances existing. It is of course crucial to prevent that the package of fuel storage tanks may not come loose from the brackets, since that would constitute a danger to the environment as a consequence of the inflammable content and the high pressure thereof in the case of gas fuel.

However, would the speed of the truck in the driving direction change rapidly, for example owing to a collision, the package of fuel storage tanks will owing to inertia be thrown away and the bracket and the strap will then be twisted for keeping said package fixed to the bracket. This would then result in a bending force applied to the bolt since the bolt has not been tightened to make the pins bearing against each other, and the bolt is not made to withstand the bending thereof then resulting, so that there is an imminent risk of a breaking of the bolt so that the fuel storage tank package will come loose from the truck.

### SUMMARY OF THE INVENTION

The object of the present invention is to provide an arrangement of the type defined in the introduction being improved in at least some aspect with respect to such arrangements already known.

This object is according to the invention obtained by providing such an arrangement with the features listed in the characterizing part of appended patent claim 1.

The hinge in the interconnection of the pins allowing the pins to tilt with respect to each other in a plane in parallel with large flat surfaces of the strap and the provision of the strap with a stiffness enabling a bending thereof in the plane of said tilting to a degree corresponding to said tilting enables a said tilting of the pins with respect to each other without applying bending forces on said member, such as a bolt, creating said interconnection, so that this member will not be bent and broken even if high forces are applied on the strap and by that on said assembly, such as in the case of fixation of objects to a chassis fixed part of a motor vehicle through heavy accelerations or retardations of the vehicle.

According to an embodiment of the invention the strap comprises at least two parts interconnected by a said assembly by each having one pin of a said couple at an end of the strap part adjacent to the end of the other strap part and a said member interconnecting these pins. Such a location of the assembly may be advantageous for providing desired access to act upon said member for tightening the strap around an object.

According to another embodiment of the invention the arrangement comprises a said assembly at at least one of the ends of the strap connected to said supporting body with said strap end provided with one pin of a said couple and the other pin of the couple connected to the supporting body and a said member interconnecting these two pins. Such a location of a said assembly may in some applications of an arrangement according to the invention be preferred, and it is also possible to combine such a location with a location of another assembly between two strap parts and/or having a said assembly at each end of the strap for enabling tightening of the strap by acting on a said member at more than one location.

According to another embodiment of the invention said member of said assembly comprises a bolt. A bolt, which is here to be interpreted as an elongated element with an external thread and accordingly comprising among others a conventional screw, is a suitable choice for a member used to tightening the strap by reducing the distance separating the pins when acted upon.

According to another embodiment of the invention the two pins of a said couple are provided both with a through-hole with a diameter exceeding the diameter of the bolt, the bolt extends through the through-holes of both pins and has a head thereof received in a seat formed around the through-hole in a first of said pins by means of a first nut with a through-hole of a diameter exceeding the diameter of the bolt and has a second nut received in a seat formed around the through-hole in a second of the pins and provided with an internal thread engaging with an external thread of the bolt, and the first and second nuts have profiles adapted to the profiles of the seats of the respective pin so as to make said nuts turning in said seats by tilting of said pins without applying bending forces upon said bolt. This constitutes a simple and reliable way of providing said assembly with a hinge in the interconnection of the pins.

According to another embodiment of the invention constituting a further development of the embodiment last mentioned said through-holes are slotted, said seats are cylindrical and formed by the slotted through-holes, and the first and second nuts have profiles adapted to the profiles of the seats of the respective pin so as to make said nuts turning in said seats by tilting of said pins without applying bending forces upon said bolt. Such a design of the bolt with nuts with cylindrical seats will then also provide a steady holder-on for tightening the bolt.

According to another embodiment of the invention the two pins have a convex shape by an enlarged cross-section around said through-holes forming said seats, and the first and second nuts have profiles adapted to the profiles of said seats on the respective pin so as to make said nuts turning in said seats by tilting of said pins without applying bending forces upon said bolt. This constitutes another possible simple and reliable way of realising a hinge in the interconnection of the pins of said assembly.

According to another embodiment of the invention the arrangement is configured to have said strap connected to a supporting member in the form of a vehicle chassis fixed part, and the arrangement may then have a strap connected to a supporting body in the form of an L-shaped bracket secured to the chassis of a vehicle. Such an arrangement is suitable to be used to fixate an object to a vehicle, such as a fuel tank to a motor vehicle, especially a heavy motor vehicle, such as a truck or a bus.

According to another embodiment of the invention the arrangement is configured to fixate elongated gas storage tanks to the chassis of a vehicle.

The invention also relates to a use of an arrangement according to the invention to fixate one or more objects to a vehicle chassis fixed part, and especially a fuel tank to a motor vehicle. The invention also relates to a motor vehicle, especially a heavy motor vehicle, such as a truck or a bus, which is provided with at least one arrangement for fixation of at least one object to a chassis fixed part of the vehicle. The advantages of such a use and motor vehicle appear clearly from the above discussion of an arrangement according to the invention and embodiments thereof.

Other advantageous features as well as advantages of the present invention appear from the description following below.

### BRIEF DESCRIPTION OF THE DRAWINGS

With reference to the appended drawings, below follows a specific description of embodiments of the invention cited as examples.

In the drawings:
- Fig 1: is a schematic view illustrating how an arrangement according to the present invention may be used for fixation of gas fuel tanks to a chassis fixed part of a heavy motor vehicle in the form of a truck,
- Fig 2: is a perspective view of an arrangement of the type to which the present invention is directed,
- Fig 3: is a perspective view of a pin of an assembly of an arrangement according to a first embodiment of the invention,
- Figs 4 and 5: are views illustrating a said assembly of an arrangement according to the first embodiment of the invention,
- Figs 6 and 7: are views illustrating an assembly of an arrangement according to a second embodiment of the invention, and
- Figs 8-10: are views illustrating an assembly of an arrangement according to a third embodiment of the invention.

### DETAILED DESCRIPTION OF EMBODIMENTS OF THE INVENTION

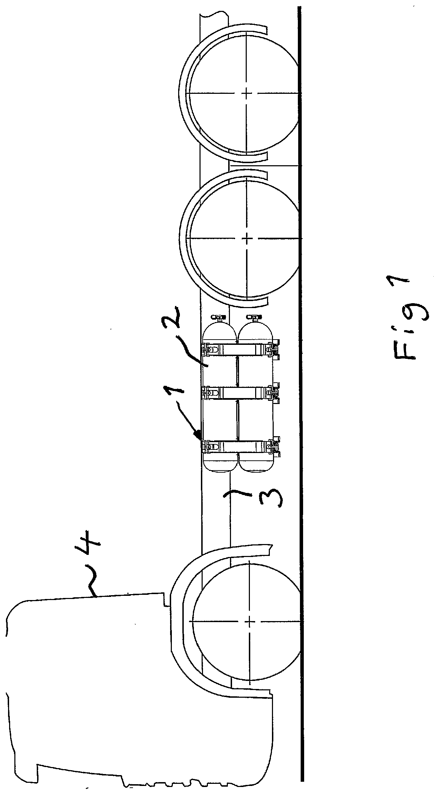

Fig 1 illustrates very schematically a possible use of an arrangement 1 according to the present invention for fixation of objects in the form of gas fuel tanks 2 to the chassis 3 of a motor vehicle 4 in the form of a truck. It is pointed out that a number of components of the vehicle have been omitted, since they have nothing to do with the present invention directed to said arrangement for fixation of objects.

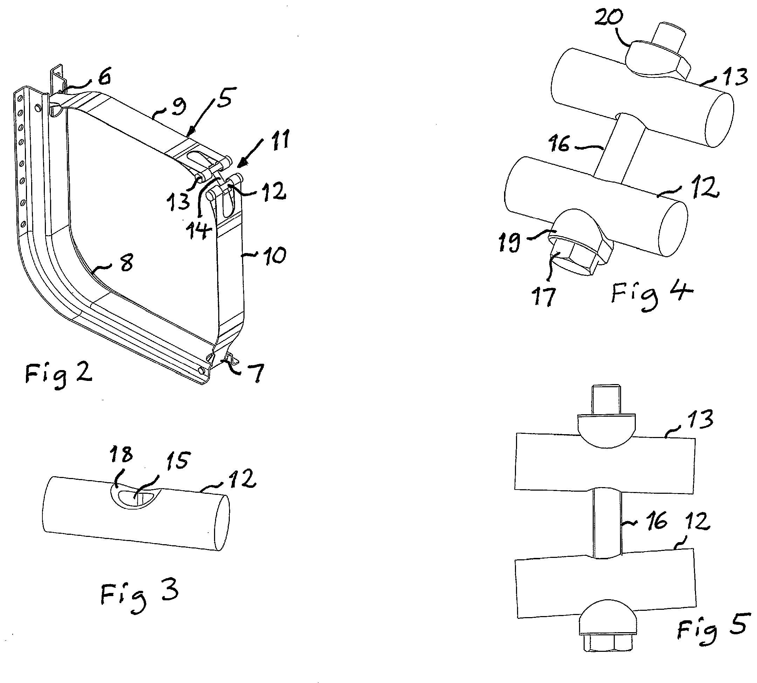

The general structure of an arrangement of the type to which the arrangement of the present invention belongs is illustrated in fig 2. This arrangement comprises a strap 5 configured to have opposite ends 6, 7 thereof connected to a supporting body in the form of an L-shaped bracket 8 to be secured to the chassis of a vehicle. The strap has two parts 9, 10 interconnected by an assembly 11 comprising a couple of two pins 12, 13, secured to an end of the respective strap part by being received in a strap end loop, spaced apart and extending transversely to the longitudinal extension of the strap and in parallel with the strap and a member 14, here a bolt, creating an interconnection of the pins and configured to be acted upon for tightening the strap around an object embraced by the strap and the bracket by reducing the distance separating the pins 12, 13.

The design of an assembly of an arrangement according to a first embodiment of the invention will now be described while making reference to figs 3-5. The two pins 12, 13 are both provided with a slotted through-hole 15 with a diameter exceding the diameter of a bolt 16 forming a said member and extending through the through-holes of both pins. The bolt 16 has a head 17 received in a cylindrical seat 18 formed by the slotted through-hole in a first 12 of the pins by means of a first nut 19 with a through-hole of a diameter exceding the diameter of the bolt and has a second nut 20 received in a cylindrical seat formed by the slotted through-hole in a second 13 of the pins and provided with an internal thread engaging with an external thread of the bolt. The first and the second nuts 19, 20 have cylindrical profiles corresponding to the profiles of the cylindrical seats in the respective pin so as to make these nuts turning in said seats by tilting of the pins without applying bending forces upon the bolt as shown in fig 5. Thus, when applied between the two strap parts 9, 10 of a strap shown in fig 2 such a strap may be tightened by turning the bolt 16 so as to reduce the distance between the two pins 12, 13. Bending forces applied to the strap by abrupt speed changes of the vehicle will result in a bending of the strap in a plane in parallel with large flat surfaces of the strap and by that tilting of the pins as shown in fig 5 without application of any bending forces upon the bolt 16, so that the interconnection of the two pins is provided with a hinge.

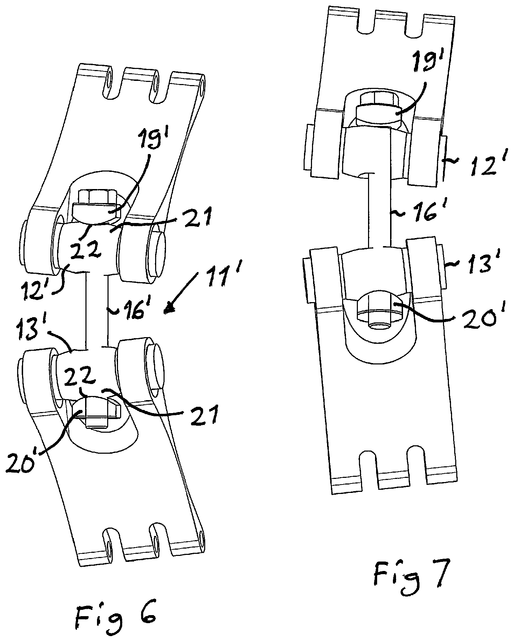

Figs 6 and 7 illustrate an assembly 11' of an arrangement according to a second embodiment of the invention different from the one shown in fig 5 by the fact that the two pins 12', 13' have a portion 21 with an enlarged cross-section around the through-hole forming a seat 22. It is shown how the first 19' and second 20' nuts have profiles corresponding to the profiles of the seats on the respective pin so as to make the nuts turning in/on said seats by tilting of the pins 12', 13' without applying bending forces upon the bolt 16'. Fig 7 shows how the pins have been tilted with respect to each other without for that sake applying any bending force upon the bolt 16'.

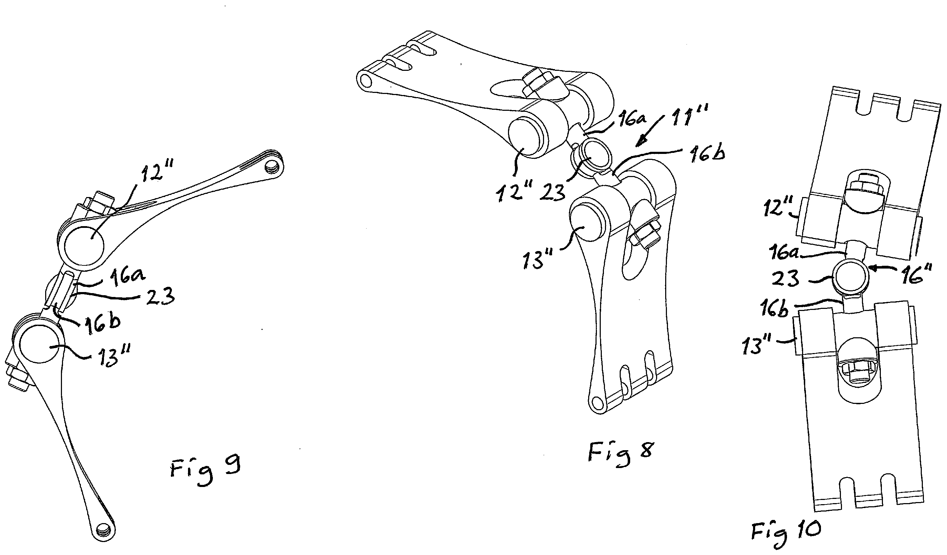

Figs 8-10 illustrate an assembly 11" being a part of an arrangement according to a third embodiment of the invention differing from the one shown in figs 3-5 by having a bolt 16" without any head and having a thread at each end engaging the internal thread of a nut so as to reduce the distance between the two pins 12", 13" by turning the bolt. Furthermore, the bolt 16" is divided into two parts 16a, 16b interconnected by a hinge 23 enabling these parts to pivot with respect to each other when the pins 12", 13" tilt with respect to each other as shown in fig 10.

The invention is of course in no way restricted to the embodiments described above, since many possibilities for modifications thereof are likely to be obvious to one skilled in the art without having to deviate from the scope of invention defined in the appended claims.

The arrangement may as already mentioned have a plurality of said assemblies, and the pins of the assemblies have not to have a circular cross-section but any elongated element with any cross-section is conceivable, although a circular or elliptical cross-section may be preferred for facilitating turning of the pin in a strap loop receiving the pin.

## Claims

1. An arrangement for fixation of one or more objects (2) comprising
• a strap (5) configured to have opposite ends (6, 7) thereof connected to a supporting body (3, 8) to which said objects are to be fixed by tightening the strap therearound, and
• a strap tightening assembly (11, 11', 11") comprising a couple of two pins (12, 13, 12', 13', 12", 13") spaced apart and extending transversely to the longitudinal extension of the strap (5) and in parallel with large flat surfaces of the strap and a member (16, 16', 16") creating an interconnection of the pins and configured to be acted upon for tightening the strap around said objects by reducing the distance separating the pins,
**characterized in that** said assembly (11, 11', 11") comprises a hinge in said interconnection allowing said pins (12, 13, 12', 13', 12", 13") to tilt with respect to each other in a plane in parallel with large flat surfaces of the strap (5).

2. An arrangement according to claim 1, **characterized in that** said strap (5) comprises at least two parts (9, 10) interconnected by a said assembly (11, 11', 11") by each having one pin of a said couple at an end of the strap part adjacent to the end of the other strap part and a said member (16, 16', 16") interconnecting these pins.

3. An arrangement according to claim 1 or 2, **characterized in that** it comprises a said assembly (11, 11', 11") at at least one of the ends of the strap connected to said supporting body (3, 8) with said strap end (6, 7) provided with one pin of a said couple and the other pin of the couple connected to the supporting body and a said member (16, 16', 16") interconnecting these two pins.

4. An arrangement according to any of the preceding claims, **characterized in that** said member of said assembly (11, 11', 11") comprises a bolt (16, 16', 16").

5. An arrangement according to claim 4, **characterized in that** the two pins (12, 13, 12', 13') of a said couple are provided both with a through-hole (15) with a diameter exceeding the diameter of the bolt (16, 16'), that the bolt extends through the through-holes of both pins and has a head (17, 17') thereof received in a seat formed around the through-hole (15) in a first (12, 12') of said pins by means of a first nut (19, 19') with a through-hole of a diameter exceeding the diameter of the bolt and has a second nut (20, 20') received in a seat formed around the through-hole in a second (13, 13') of the pins and provided with an internal thread engaging with an external thread of the bolt, and that the first (19, 19') and second nuts (20, 20') have profiles adapted to the profiles of the seats of the respective pin so as to make said nuts turning in said seats by tilting of said pins without applying bending forces upon said bolt.

6. An arrangement according to claim 5, **characterized in that** said through-holes (15) are slotted, that said seats (18) are cylindrical and formed by the slotted through-holes, and that the first (19) and second (20) nuts have profiles adapted to the profiles of the seats of the respective pin (12, 13) so as to make said nuts turning in said seats by tilting of said pins without applying bending forces upon said bolt (16).

7. An arrangement according to claim 5, **characterized in that** the two pins (12', 13') have a convex shape by an enlarged cross-section around said through-holes forming said seats (22), and that the first (19') and second (20') nuts have profiles adapted to the profiles of said seats on the respective pin so as to make said nuts turning in said seats by tilting of said pins without applying bending forces upon said bolt (16').

8. An arrangement according to any of the preceding claims, **characterized in that** it is configured to have said strap (5) connected to a supporting body (3) in the form of a vehicle chassis fixed part.

9. An arrangement according to claim 8, **characterized in that** it is configured to have said strap (5) connected to a supporting body in the form of an L-shaped bracket (8) secured to the chassis (3) of a vehicle (4).

10. An arrangement according to claim 8 or 9, **characterized in that** it is configured to fixate a fuel tank (2) to a motor vehicle (4), especially a heavy motor vehicle, such as a truck or a bus.

11. An arrangement according to claim 10, **characterized in that** it is configured to fixate elongated gas storage tanks (2) to the chassis (3) of a vehicle (4).

12. Use of an arrangement according to any of the preceeding claims to fixate one or more objects (2) to a vehicle chassis (3) fixed part.

13. A motor vehicle, especially a heavy motor vehicle, such as a truck or a bus, **characterized in that** it is provided with at least one arrangement (1) according to any of claims 1-11 for fixation of at least one object to a chassis fixed part of the vehicle.

## Patentansprüche

1. Anordnung zum Befestigen eines oder mehrerer Gegenstände (2), die Folgendes umfasst:
• einen Gurt (5), der derart konfiguriert ist, dass seine entgegengesetzten Enden (6, 7) mit einem Trägerkörper (3, 8) verbunden sind, an dem die Gegenstände durch Spannen des Gurtes um diesen herum zu befestigen sind, und
• eine Gurtstraffungsbaugruppe (11, 11', 11"), die ein Paar Stifte (12, 13, 12', 13', 12", 13") umfasst, die voneinander beabstandet sind und sich quer zur Längserstreckung des Gurtes (5) und parallel zu großen, ebenen Flächen des Gurtes erstrecken, und ein Element (16, 16', 16"), das eine Verbindung zwischen den Stiften herstellt und derart gestaltet ist, dass es betätigt werden kann, um den Gurt um die Gegenstände festzuziehen, indem der Abstand zwischen den Stiften verringert wird,
**dadurch gekennzeichnet, dass** die Baugruppe (11, 11', 11") ein Scharnier in der Verbindung umfasst, damit die Stifte (12, 13, 12', 13', 12", 13") in einer Ebene parallel zu den großen, ebenen Flächen des Gurtes (5) zueinander schwenken können.

2. Anordnung nach Anspruch 1, **dadurch gekennzeichnet, dass** der Gurt (5) wenigstens zwei Teile (9, 10) umfasst, die durch die Baugruppe (11, 11', 11") miteinander verbunden sind, indem sie jeweils einen Stift des Paares an einem Ende des Gurtteils neben dem Ende des anderen Gurtteils und ein Element (16, 16', 16") zum Verbinden dieser Stifte aufweisen.

3. Anordnung nach Anspruch 1 oder 2, **dadurch gekennzeichnet, dass** sie Folgendes umfasst: eine Baugruppe (11, 11', 11") an wenigstens einem Gurtende, das mit dem Trägerkörper (3, 8) verbunden ist, wobei das Gurtende (6, 7) einen Stift des Paares aufweist und der andere Stift des Paares mit dem Trägerkörper verbunden ist, und ein Element (16, 16', 16"), das die beiden Stifte miteinander verbindet.

4. Anordnung nach einem der vorhergehenden Ansprüche, **dadurch gekennzeichnet, dass** das Element der Baugruppe (11, 11', 11") einen Bolzen (16, 16', 16") umfasst.

5. Anordnung nach Anspruch 4, **dadurch gekennzeichnet, dass** die beiden Stifte (12, 13, 12', 13') eines solchen Paares jeweils eine Durchgangsbohrung (15) aufweisen, deren Durchmesser größer ist als der Durchmesser des Bolzens (16, 16'), dass der Bolzen sich durch die Durchgangsbohrungen beider Stifte erstreckt und einen Kopf (17, 17') aufweist, der in einem Sitz aufgenommen ist, der um die Durchgangsbohrung (15) in einem ersten (12, 12') Stift mittels einer ersten Mutter (19, 19') mit einer Durchgangsbohrung, deren Durchmesser größer ist als der Durchmesser des Bolzens, ausgebildet ist, und eine zweite Mutter (20, 20'), die in einem Sitz aufgenommen ist, der um die Durchgangsbohrung in einem zweiten (13, 13') Stift ausgebildet ist, und ein Innengewinde aufweist, das in ein Außengewinde des Bolzens eingreift, und dass die erste (19, 19') und die zweite Mutter (20, 20') jeweils ein Profil aufweisen, das an das Profil des Sitzes des jeweiligen Stifts angepasst ist, sodass sich die Muttern im jeweiligen Sitz durch Schwenken der Stifte drehen, ohne Biegekräfte auf den Bolzen auszuüben.

6. Anordnung nach Anspruch 5, **dadurch gekennzeichnet, dass** die Durchgangsbohrungen (15) geschlitzt sind, dass die Sitze (18) zylindrisch sind und durch die geschlitzten Durchgangsbohrungen gebildet sind und dass die erste (19) und die zweite (20) Mutter jeweils ein Profil aufweisen, das an das Profil des Sitzes des jeweiligen Stifts (12, 13) angepasst ist, sodass sich die Muttern in dem jeweiligen Sitz durch Schwenken der Stifte drehen, ohne Biegekräfte auf den Bolzen (16) auszuüben.

7. Anordnung nach Anspruch 5, **dadurch gekennzeichnet, dass** die beiden Stifte (12', 13') durch einen vergrößerten Querschnitt um die Durchgangsbohrungen, die die Sitze (22) bilden, eine konvexe Form aufweisen und dass die erste (19') und die zweite (20') Mutter jeweils ein Profil aufweisen, das an das Profil des Sitzes an dem jeweiligen Stift angepasst ist, sodass sich die Muttern in dem jeweiligen Sitz durch Schwenken der Stifte drehen, ohne Biegekräfte auf den Bolzen (16') auszuüben.

8. Anordnung nach einem der vorhergehenden Ansprüche, **dadurch gekennzeichnet, dass** sie derart konfiguriert ist, dass der Gurt (5) mit einem Trägerkörper (3) in Form eines an dem Fahrgestell befestigten Teils verbunden ist.

9. Anordnung nach Anspruch 8, **dadurch gekennzeichnet, dass** sie derart konfiguriert ist, dass der Gurt (5) mit einem Trägerkörper in Form einer L-förmigen Halterung (8), die an dem Fahrgestell (3) eines Fahrzeugs (4) befestigt ist, verbunden ist.

10. Anordnung nach Anspruch 8 oder 9, **dadurch gekennzeichnet, dass** sie zum Befestigen eines Kraftstofftanks (2) an einem Kraftfahrzeug (4), insbesondere an einem schweren Kraftfahrzeug wie einem Lkw oder Bus, ausgebildet ist.

11. Anordnung nach Anspruch 10, **dadurch gekennzeichnet, dass** sie zum Befestigen von langen Gastanks (2) am Fahrgestell (3) eines Fahrzeugs (4) ausgebildet ist.

12. Verwendung einer Anordnung nach einem der vorhergehenden Ansprüche zum Befestigen eines oder mehrerer Gegenstände (2) an einem an dem Fahrgestell (3) des Fahrzeugs befestigten Teil.

13. Kraftfahrzeug, insbesondere ein schweres Kraftfahrzeug wie ein Lkw oder Bus, **dadurch gekennzeichnet, dass** es wenigstens eine Anordnung (1) nach einem der Ansprüche 1 bis 11 zum Befestigen wenigstens eines Gegenstands an einem an dem Fahrgestell befestigten Teil des Fahrzeugs aufweist.

## Revendications

1. Dispositif de fixation d'un ou de plusieurs objets (2) comprenant
• une sangle (5) configurée pour avoir des extrémités opposées (6, 7) de celle-ci connectées à un corps de support (3, 8) auquel lesdits objets doivent être fixés en serrant la sangle autour de ceux-ci, et
• un ensemble de serrage de sangle (11, 11', 11") comprenant une paire de deux broches (12, 13, 12', 13', 12", 13") espacées et s'étendant transversalement au prolongement longitudinal de la sangle (5) et parallèlement aux grandes surfaces plates de la sangle, et un élément (16, 16', 16") créant une interconnexion des broches et configuré pour être sollicité pour serrer la sangle autour desdits objets en réduisant la distance séparant les broches,
**caractérisé en ce que** ledit ensemble (11, 11', 11") comprend une charnière dans ladite interconnexion permettant auxdites broches (12, 13, 12', 13', 12", 13") de s'incliner l'une par rapport à l'autre dans un plan parallèle aux grandes surfaces plates de la sangle (5).

2. Dispositif selon la revendication 1, **caractérisé en ce que** ladite sangle (5) comprend au moins deux parties (9, 10) interconnectées par un dit ensemble (11, 11', 11") en ayant chacune une broche d'une dite paire au niveau d'une extrémité de la partie de sangle adjacente à l'extrémité de l'autre partie de sangle et un dit élément (16, 16', 16") interconnectant ces broches.

3. Dispositif selon la revendication 1 ou 2, **caractérisé en ce qu'**il comprend un dit ensemble (11, 11', 11") au niveau d'au moins l'une des extrémités de la sangle connectée audit corps de support (3, 8), ladite extrémité de sangle (6, 7) étant munie d'une broche d'une dite paire et l'autre broche de la paire étant connectée au corps de support et un dit élément (16, 16', 16") interconnectant ces deux broches.

4. Dispositif selon l'une quelconque des revendications précédentes, **caractérisé en ce que** ledit élément dudit ensemble (11, 11', 11") comprend un boulon (16, 16', 16").

5. Dispositif selon la revendication 4, **caractérisé en ce que** les deux broches (12, 13, 12', 13') d'une dite paire sont toutes deux munies d'un trou traversant (15) dont le diamètre est supérieur au diamètre du boulon (16, 16'), **en ce que** le boulon s'étend à travers les trous traversants des deux broches et a une tête (17, 17') de celui-ci reçu dans un logement formé autour du trou traversant (15) dans une première (12, 12') desdites broches au moyen d'un premier écrou (19, 19') avec un trou traversant d'un diamètre supérieur au diamètre du boulon et a un deuxième écrou (20, 20') reçu dans un logement formé autour du trou traversant dans une seconde (13, 13') des broches et muni d'un filetage interne en prise avec un filetage externe du boulon, et **en ce que** les premier (19, 19') et second écrous (20, 20') ont des profils adaptés aux profils des logements de la broche respective de manière à faire tourner lesdits écrous dans lesdits logements par basculement desdites broches sans appliquer de forces de flexion sur ledit boulon.

6. Dispositif selon la revendication 5, **caractérisé en ce que** lesdits trous traversants (15) sont fendus, **en ce que** lesdits logements (18) sont cylindriques et formés par les trous traversants fendus, et **en ce que** les premier (19) et second (20) écrous ont des profils adaptés aux profils des logements de la broche respective (12, 13) de manière à faire tourner lesdits écrous dans lesdits logements par basculement desdites broches sans appliquer de forces de flexion sur ledit boulon (16).

7. Dispositif selon la revendication 5, **caractérisé en ce que** les deux broches (12', 13') ont une forme convexe par une section transversale agrandie autour desdits trous traversants formant lesdits logements (22), et **en ce que** les premier (19') et second (20') écrous ont des profils adaptés aux profils desdits logements sur la broche respective de manière à faire tourner lesdits écrous dans lesdits logements par basculement desdites broches sans appliquer de forces de flexion sur ledit boulon (16').

8. Dispositif selon l'une quelconque des revendications précédentes, **caractérisé en ce qu'**il est configuré pour que ladite sangle (5) soit connectée à un corps de support (3) sous la forme d'une partie fixe de châssis de véhicule.

9. Dispositif selon la revendication 8, **caractérisé en ce qu'**il est configuré pour que ladite sangle (5) soit connectée à un corps de support sous la forme d'un support en L (8) attaché au châssis (3) d'un véhicule (4).

10. Dispositif selon la revendication 8 ou 9, **caractérisé en ce qu'**il est configuré pour fixer un réservoir de carburant (2) à un véhicule à moteur (4), en particulier un véhicule lourd, tel qu'un camion ou un bus.

11. Dispositif selon la revendication 10, **caractérisé en ce qu'**il est configuré pour fixer des réservoirs de stockage de gaz allongés (2) au châssis (3) d'un véhicule (4).

12. Utilisation d'un dispositif selon l'une quelconque des revendications précédentes pour fixer un ou plusieurs objets (2) à une partie fixe du châssis (3) d'un véhicule.

13. Véhicule à moteur, en particulier un véhicule lourd tel qu'un camion ou un bus, **caractérisé en ce qu'**il est muni d'au moins un dispositif (1) selon l'une quelconque des revendications 1 à 11 pour la fixation d'au moins un objet à une partie fixe du châssis du véhicule.
